# EUROPEAN PATENT APPLICATION

(11) **EP 4 333 503 A1**
(43) Date of publication of application: **06.03.2024**
(21) Application number: 22796047.3
(22) Date of filing: 22.04.2022
(51) Int. Cl.: H04W 36/30, H04W 36/32, H04W 36/00, H04W 84/06, H04B 7/185, H04B 17/382, H04W 36/24

(54) **METHOD AND DEVICE FOR CONTROLLING MOBILITY**

(30) Priority: 28.04.2021 KR 20210055126; 28.04.2021 KR 20210055137; 18.04.2022 KR 20220047442
(71) Applicant: KT Corporation, Seongnam-si, Gyeonggi-do 13606 (KR)
(72) Inventor: HONG, Sung-pyo, Seongnam-si Gyeonggi-do 13606 (KR)
(74) Representative: Brevalex
(86) International application number: PCT/KR2022/005753
(87) International publication number: WO 2022/231214

(57) **Abstract**

Provided are a method and apparatus for controlling the mobility of a terminal in a non-terrestrial network. The method may include receiving handover request information for a handover of the terminal, from a source base station or a core network entity; reserving a radio resource for the handover of the terminal on the basis of the handover request information; and determining whether or not the reserved radio resource is to be released, by means of serving cell availability time information included in the handover request information.

## Description

### [Technical Field]

This disclosure relates to controlling the mobility of a user equipment (UE) in a non-terrestrial network situation.

### [Background Art]

As smartphones become increasingly common and wireless communication devices service a variety of purposes, there is a surge in data transmissions via wireless communication technology. The need for low latency is becoming paramount, leading to the development of a next-generation wireless communication technology beyond LTE, known as New RAT.

Further, the number of UEs utilizing wireless communication technology is on the rise, with an increasing demand for communication in various environments and locations. Given these circumstances, there is an emerging need arises to expand coverage and offer communication services in areas where wired base stations are impractical.

To address this, research is underway on non-terrestrial networks that connect to the core network through airborne means instead of ground-based stations. A non-terrestrial network utilizes airborne vehicles, like high-altitude platform (HAPS), or spaceborne vehicles, such as satellites, for transmission.

Non-terrestrial networks feature cells that move at high speeds and provide expansive coverage. Given these characteristics, efficient mobility control operation are essential to maintain the mobility of the UE when transitioning between terrestrial and non-terrestrial networks.

### [Detailed Description of the Invention]

### [Technical Problem]

The present embodiments may provide a method and device for controlling the mobility of a UE in a non-terrestrial network situation.

### [Technical Solution]

In an aspect, the present embodiments may provide a method for controlling handover of a UE by a target base station. The method may include receiving handover request information for the handover of the UE from a source base station or a core network entity. Or, the present embodiments may provide a method for controlling handover of a UE by a target base station, comprising reserving a radio resource for handover of a UE based on handover request information by the target base station. The present embodiments may provide a method for controlling handover of a UE by a target base station, comprising determining whether to release a reserved radio resource using serving cell available time information included in handover request information.

In another aspect, the present embodiments may provide a method for controlling handover of a UE by a source base station. The method may include configuring conditional handover to the UE. The present embodiments may provide a method for controlling handover of a UE by a source base station, comprising configuring handover request information including serving cell available time information for the UE. The present embodiments may provide a method for controlling handover of a UE by a source base station, comprising transmitting handover request information to a target base station or a core network entity. The target base station may control the radio resources for handover of the UE using the serving cell available time information included in the handover request information.

In another aspect, the present embodiments may provide a target base station controlling handover of a UE. The target base station may include a receiver receiving handover request information for the handover of the UE from a source base station or a core network entity. The target base station may include a controller reserving a radio resource for the handover of the UE based on handover request information and determining whether to release the reserved radio resource using serving cell available time information included in the handover request information.

In another aspect, the present embodiments may provide a source base station controlling handover of a UE. The source base station may include a controller configuring conditional handover to the UE and configuring handover request information including serving cell available time information for the UE. The present embodiments may provide a source base station controlling handover of a UE. The source base station may includea transmitter transmitting handover request information to a target base station or a core network entity. The target base station may control the radio resources for handover of the UE using the serving cell available time information included in the handover request information.

### [Advantageous Effects]

According to the embodiments, the mobility of a UE is effectively controlled in a non-terrestrial network situation.

### [Brief Description of Drawings]

FIG. 1 is a view schematically illustrating an NR wireless communication system;
FIG. 2 is a view for explaining a frame structure in an NR system;
FIG. 3 is a view for explaining resource grids supported by a radio access technology;
FIG. 4 is a view for explaining bandwidth parts supported by a radio access technology;
FIG. 5 is a view illustrating an example of a synchronization signal block in a radio access technology;
FIG. 6 is a view for explaining a random access procedure in a radio access technology;
FIG. 7 is a view for explaining CORESET;
FIG. 8 is a view illustrating an example of an NTN scenario;
FIG. 9 is a flowchart illustrating operations of a target base station according to an embodiment;
FIG. 10 is a flowchart illustrating operations of a source base station according to an embodiment;
FIG. 11 is a view illustrating an earth-centered, earth-fixed coordinate relationship for the latitude and longitude;
FIG. 12 is a block diagram illustrating a target base station according to an embodiment; and
FIG. 13 is a block diagram illustrating a source base station according to an embodiment.

### [Mode for Carrying out the Invention]

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (a), (b) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-LTMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information through a control channel, such as a physical downlink control channel (PDCCH) and a physical uplink control channel (PUCCH). The uplink and downlink transmit and receive data through a data channel such as a physical downlink shared channel (PDSCH) and a physical uplink shared channel (PUSCH). Hereinafter, the transmission and reception of a signal through a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR discloses a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

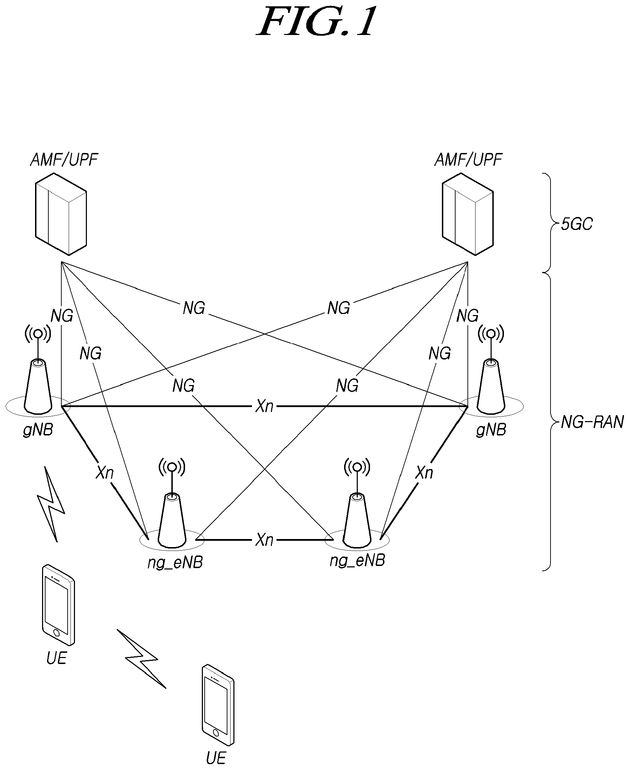

FIG. 1 is a view schematically illustrating an NR system.

Referring to FIG. 1, the NR system is divided into a 5G core network (5GC) and an NG-RAN part, and the NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1: FR1) and frequency bands equal to or greater than 6 GHz (frequency range 2: FR2).

The gNB denotes a base station that provides a UE with an NR user plane and control plane protocol end, and the ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario through frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP), and, as shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

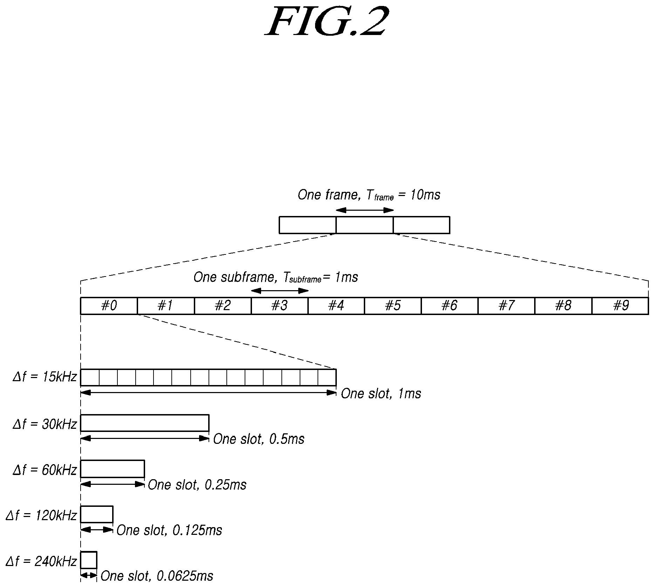

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 12, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

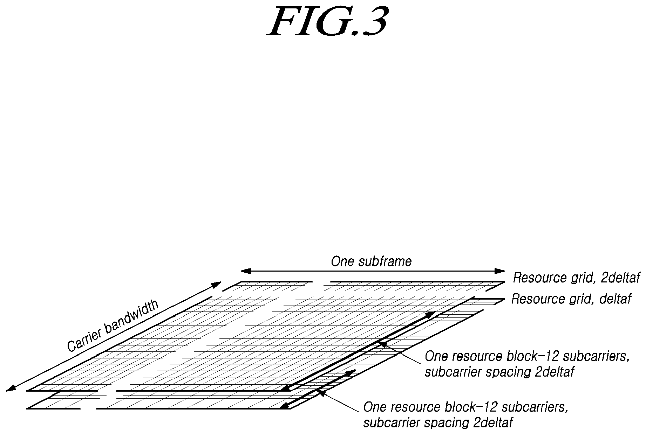

FIG. 3 is a view for explaining resource grids supported by a radio access technology.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

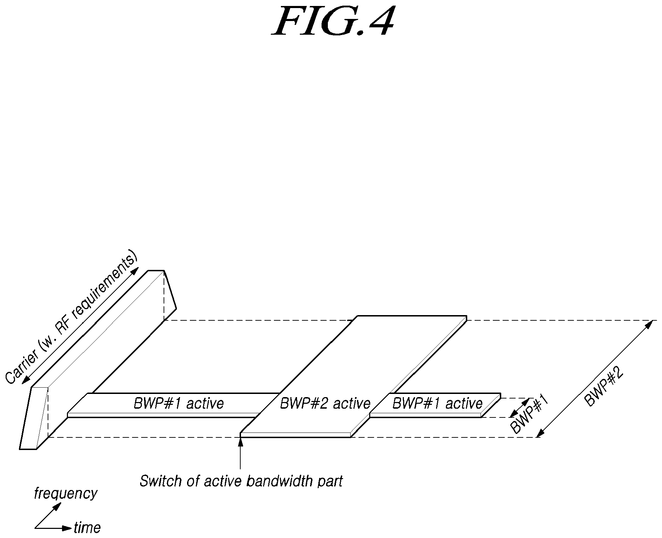

FIG. 4 is a view for explaining bandwidth parts supported by a radio access technology.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink, and the UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs so as to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

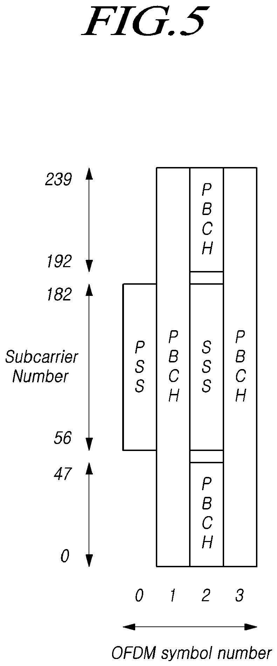

FIG. 5 is a view illustrating an example of a synchronization signal block in a radio access technology.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that can be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB through the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted through a PDSCH. In order to receive SIB1, the UE must receive numerology information used for the SIB 1 transmission and the CORESET (control resource set) information used for scheduling of SIB 1 through a PBCH. The UE identifies scheduling information for SIB 1 using SI-RNTI in the CORESET, and acquires SIB 1 on the PDSCH according to scheduling information. The remaining SIBs other than SIB1 may be periodically transmitted, or the remaining SIBs may be transmitted according to the request of the UE.

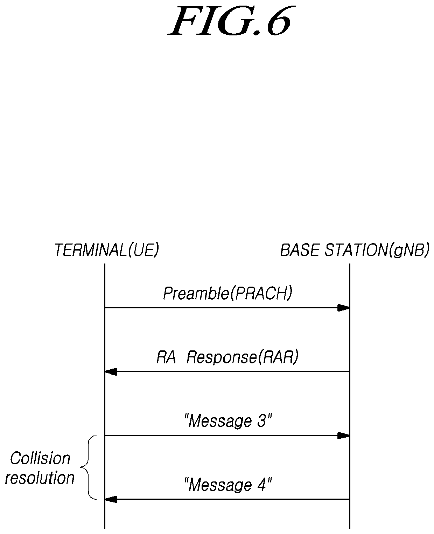

FIG. 6 is a view for explaining a random access procedure in a radio access technology.

Referring to FIG. 6, if a cell search is completed, the UE transmits a random access preamble for random access to the base station. The random access preamble is transmitted through a PRACH. Specifically, the random access preamble is periodically transmitted to the base station through the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

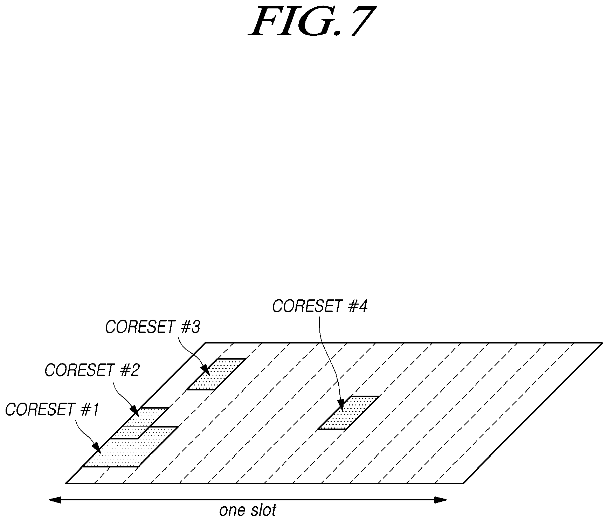

FIG. 7 is a view for explaining CORESETs.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

As used herein, the frequency, frame, subframe, resource, resource block, region, band, subband, control channel, data channel, synchronization signal, various reference signals, various signals, and various messages related to new radio (NR) may be interpreted in various meanings as currently used or to be used in the future.

### Non-terrestrial network (NTN)

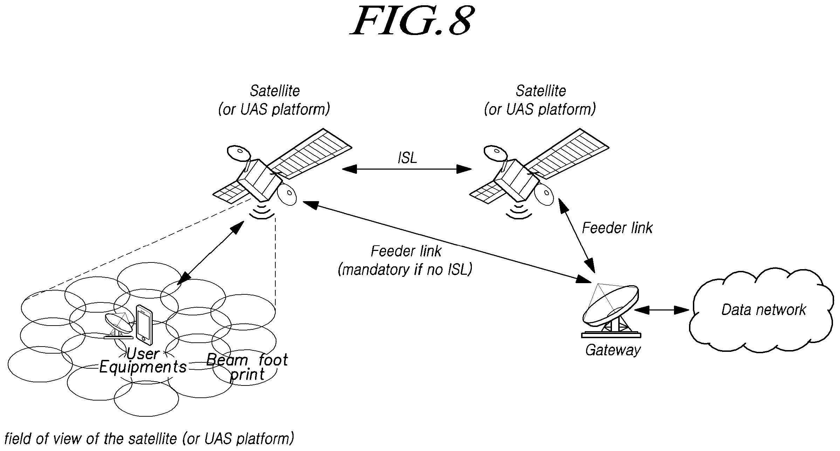

FIG. 8 is a view illustrating an example of an NTN scenario.

Non-terrestrial network refers to a network or a network segment that uses RF resources mounted on a satellite or unmanned aircraft system (UAS) platform.

NTN may be implemented in various fashions as follows:
- Scenario A: Transparent GEO (NTN beam foot print fixed on earth)
- Scenario B: Regenerative GEO (NTN beam foot print fixed on earth)
- Scenario C1: Transparent LEO (NTN beam foot print fixed on earth)
- Scenario C2: Transparent LEO (NTN beam foot print moving on earth)
- Scenario D1: Regenerative LEO (NTN beam foot print fixed on earth)
- Scenario D2: Regenerative LEO (NTN beam foot print moving on earth)

Here, transparent payload or regenerative payload is defined as follows.
- A transparent payload: Radio Frequency filtering, Frequency conversion and amplification. Hence, the waveform signal repeated by the payload is un-changed.
- A regenerative payload: Radio Frequency filtering, Frequency conversion and amplification as well as demodulation/decoding, switch and/or routing, coding/modulation. This is effectively equivalent to having all or part of base station functions (e.g., gNB) on board the satellite (or UAS platform).

Further, three types of service links are supported in the NTN scenario.
- Earth-fixed: provision by beam(s) continuously covering the same geographical areas all the time(e.g., the case of GEO satellites and HAPS).
- Quasi-Earth-fixed: provision by beam(s) covering one geographic area for a finite period and a different geographic area during another period (e.g., the case of NGEO satellites generating steerable beams).
- Earth-moving: provision by beam(s) which footprint slides over the Earth surface (e.g., the case of NGEO satellites generating fixed or non-steerable beams).

The non-geostationary earth orbit includes a circular orbit of a satellite constellation at altitudes above 300km. The non-geostationary earth orbit includes a low-earth orbit between about 300km and 1,500km and a medium earth orbit between about 1,500km and 35,786km. For non-geostationary earth orbit satellites, the base station (gNB) may provide quasi-earth-fixed cells or earth-moving cells. The base station may provide earth-fixed cells for geostationary earth orbit satellites.

The propagation delay of the non-terrestrial network (NTN) is larger than that of the terrestrial network. The propagation delay of the non-terrestrial network (NTN) causes additional delays in mobility signaling, such as measurement reporting and handover command reception. Further, unlike terrestrial networks, non-terrestrial networks (NTN) have a small difference between reference signal received power (RSRP) at the cell edge and RSRP at the cell center. Accordingly, it is difficult to identify better cells through handover based on traditional measurement events (e.g., A3 events). Additionally, non-geostationary earth orbit satellites move at high speeds at a given position on Earth and cause frequent handover to the UE. According to the 3GPP NTN technical report, when the LEO satellite speed is 7.56 km/s and the cell diameter is 50 km, handover occurs every 6 to 7 seconds. This may cause handover of multiple connected UEs positioned within the cell coverage during a given time, resulting in large signaling overhead.

For UEs that support non-terrestrial network communication, communication services through non-terrestrial networks may be provided in areas where terrestrial network communication services are not provided or in areas where terrestrial network services are insufficient. In areas within the terrestrial network coverage, communication services may be provided through the terrestrial network. This allows operators to efficiently expand service coverage. To achieve this, services between non-terrestrial networks and terrestrial networks must interwork effectively. For example, when a UE moves, if the non-terrestrial network and the terrestrial network are owned by a single operator or if an agreement is concluded between the operator owning the non-terrestrial network and the operator owning the terrestrial network, it is preferable to support service continuity between the terrestrial network and the non-terrestrial network. Despite these advantages, there has not been a specific technology introduced thus far. Additionally, no technology exists yet for a method and device for efficiently facilitate handovers in a non-terrestrial network.

In the foregoing background, the disclosure introduces a method and device for ensuring service continuity either within a non-terrestrial network or between a terrestrial network and a non-terrestrial network. Also the disclosure introduces a method and device for efficiently facilitating handover in a non-terrestrial network.

The following describes a mobility control method between a non-terrestrial network (NTN) and terrestrial network (TN), both based on 5G NR radio access technology. However, embodiments are not limited thereto. For example, the embodiments may also be applied to a mobility control method between a non-terrestrial network and a terrestrial network based on any radio access technology. The embodiments may also be applied for mobility control in a non-terrestrial network or in a terrestrial network based on any radio access technology (e.g., 5G, 6G). Further, handover provision technology in 5G NR radio access technology-based non-terrestrial networks is described. However, the embodiments are not limited thereto. For example, the embodiments may also be applied to handover in a non-terrestrial network based on any radio access technology.

The embodiments described in this disclosure might encompass the information elements and operations specified in TS 38.321 (the NR MAC standard) and TS 38.331 (the NR RRC standard). While the disclosure does not detail the UE operations linked to the definitions of these information elements, content from the relevant standards may be incorporated in the present embodiments. The described embodiments may be applied either individually or in various combinations.

Further, although the description of the disclosure focuses on the target base station and the source base station, the embodiments also encompass UE operations and configuration relevant to the application of the same content.

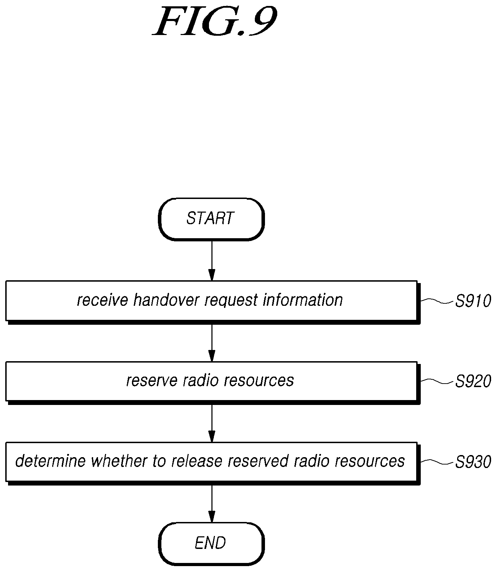

FIG. 9 is a flowchart illustrating operations of a target base station according to an embodiment.

Referring to FIG. 9, in a method for controlling handover of a UE, a target base station may perform the step of receiving handover request information for handover of the UE from a source base station or a core network entity (S910).

For example, the target base station may receive the UE's handover request information from the source base station through an Xn interface. The handover request information may be included in a handover request message. Or, the target base station may receive the handover request information from the core network entity. In this case, the handover request information may be included in the handover request message.

The handover of the UE may be i) handover through the core network entity or ii) handover between base stations. Further, the UE's handover may be conditional handover. The conditional handover is handover performed by the UE if preset conditions are met. For example, the preset conditions may be a time, wireless quality measurement results, etc.

In accordance with an embodiment, the handover request information may include handover window information for handover of the UE. The handover window information indicates the period during which the target base station may serve the UE's handover. Accordingly, the handover window information indicates a time range in which the UE may proceed with related procedures to perform handover. However, the embodiments are limited thereto.. For example, the handover window information may include at least one of a duration and a service start time in which the UE may provide service through the target base station. Or, the handover window information may include window start time and window end time. The service start time may correspond to the windows start time. Or, the service end time may be recognized by using a duration serviceable in the service start time. Here, absolute time (e.g., UTC, coordinated universal time) may be used as the time information.

According to another embodiment, the handover request information may include serving cell available time information. For example, the handover request information may include information about the remaining serviceable time of the serving cell to which the UE is currently connected. The serving cell available time information may be configured in various forms, such as duration type or end time information.

The handover request information may further include one or more of target identifier (ID), global radio access network (RAN) node ID, selected tracking area identity (TAI), target non-terrestrial network base station node ID, target non-terrestrial network cell ID, and transparent container (source to target transparent container) transmitted from the source to the target, packet data unit (PDU) session IDs, information for indicating that the corresponding handover originates from the (5G/NR) terrestrial network, and conditional handover information request information. The conditional handover information request information may include one or more of conditional handover (CHO) trigger estimated arrival probability information, UE position information, information about the area/district/zone where the UE is located, UE moving speed information, UE moving direction information, expected UE path information, and remaining/allowed/available service/access time estimated by the serving cell for the UE.

The target base station may perform the step of reserving radio resources for handover of the UE based on the handover request information (S920).

In accordance with an embodiment, the target base station may reserve radio resources for handover of the UE if the handover request information is received from the source base station or core network entity. For example, the target base station may reserve specific radio resources for conditional handover for the UE. The reserved radio resources may be provided preferentially for the corresponding UE, and use of radio resources may be restricted until the reservation is released.

The target base station may perform the step of determining whether to release the reserved radio resources using the serving cell available time information included in the handover request information (S930).

In accordance with an embodiment, if the serving cell available time information is included in the handover request information, the target base station may determine whether to release the reserved radio resources using the serving cell available time information.

For example, if it is determined that the serving cell service time according to the serving cell available time information has ended, the target base station may determine to release the reserved radio resources.

As another example, the target base station may determine to release the reserved radio resources if a message instructing to release the reserved radio resources is received from the source base station or core network entity.

As further another example, the target base station may determine to release the reserved radio resources when the serving cell available time expires without the UE successfully completing handover to the target cell of the target base station.

As still another example, the target base station may determine to release the reserved radio resources when the serving cell available time expires after the UE successfully completes handover to another candidate target cell.

As yet another example, the target base station may determine to release the reserved radio resources when the serving cell available time expires even before a handover cancel message is received after the UE successfully completes handover to another candidate target cell.

Further, the target base station may release the radio resources reserved for the UE if a specific time elapses using information included in the handover request information. Thus, it is possible to prevent unnecessary long-term reservation of radio resources due to frequent UE handover according to an embodiment.

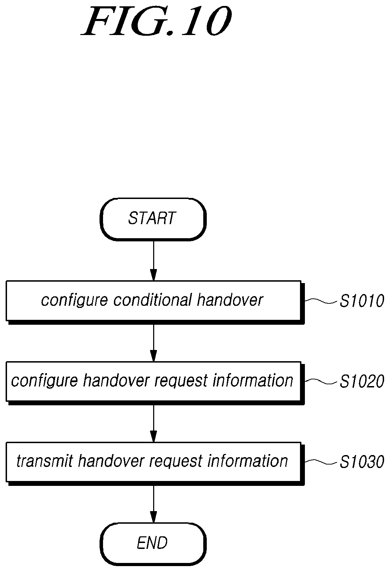

FIG. 10 is a flowchart illustrating operations of a source base station according to an embodiment.

Referring to FIG. 10, in a method for controlling handover of a UE, the source base station may perform the step of configuring conditional handover to the UE (S1010).

For example, the source base station may transmit handover configuration information to the UE to control handover of the UE. According to the handover configuration information, the UE may perform operations, such as measuring radio quality for specific cells and reporting radio quality measurement results. Further, relevant information for performing handover may be stored and configured in the UE. The UE's handover may be conditional handover that is performed by the UE when preset conditions are met. For example, the preset conditions may be a time, wireless quality measurement results, etc.

The source base station may perform the step of configuring handover request information including serving cell available time information for the UE (S1020).

The handover request information may include necessary information transferred to the target base station to support handover of the UE.

According to an embodiment, the handover request information may include handover window information for handover of the UE. The handover window information indicates a period (e.g., duration) which the target base station may serve the UE's handover. Accordingly, the handover window information indicates a time range in which the UE may proceed with related procedures to perform handover. However, the embodiments are not limited thereto. For example, the handover window information may include at least one of duration and service start time in which the UE may provide service through the target base station. Or, the handover window information may include window start time and window end time. The service start time may correspond to the windows start time. Or, the service end time may be recognized by using duration serviceable in the service start time. Here, absolute time (e.g., UTC, coordinated universal time) may be used as the time.

According to another embodiment, the handover request information may include serving cell available time. For example, the handover request information may include information about the remaining serviceable time of the serving cell to which the UE is currently connected. The serving cell available time may be configured in various forms, such as duration type or end time information.

The handover request information may further include one or more of target identifier (ID), global radio access network (RAN) node ID, selected tracking area identity (TAI), target non-terrestrial network base station node ID, target non-terrestrial network cell ID, and transparent container (source to target transparent container) transmitted from the source to the target, packet data unit (PDU) session IDs, information for indicating that the corresponding handover originates from the (5G/NR) terrestrial network, and conditional handover information request information. The conditional handover information request information may include one or more of conditional handover (CHO) trigger estimated arrival probability information, UE position information, information about the area/district/zone where the UE is located, UE moving speed information, UE moving direction information, expected UE path information, and remaining/allowed/available service/access time estimated by the serving cell for the UE.

The source base station may perform the step of transmitting handover request information to the target base station or core network entity (S 1030).

For example, the source base station may transmit the UE's handover request information to the target base station through the Xn interface. The handover request information may be included in a handover request message. Or, the source base station may transmit handover request information to the core network entity (e.g., AMF or S-AMF) in the case of a handover procedure through the core network entity. Even in this case, the handover request information may be included in the handover request message.

Meanwhile, if necessary, the source base station may receive a handover complete message from the UE and transmit a handover cancel message to the target base station to which the UE has not handed over.

The target base station may control the radio resources for handover of the UE using the serving cell available time information included in the handover request information. For example, the target base station may reserve radio resources for handover of the UE if the handover request information is received from the source base station or core network entity. For example, the target base station may reserve specific radio resources for conditional handover for the UE. The reserved radio resources may be provided preferentially for the corresponding UE, and use of radio resources may be restricted until the reservation is released.

Further, the target base station may determine whether to release the reserved radio resources using the serving cell available time information included in the handover request information. For example, if the serving cell available time information is included in the handover request information, the target base station may determine whether to release the reserved radio resources using the serving cell available time information.

For example, if it is determined that the serving cell service time according to the serving cell available time information has ended, the target base station may determine to release the reserved radio resources. As another example, the target base station may determine to release the reserved radio resources if a message instructing to release the reserved radio resources is received from the source base station or core network entity. As further another example, the target base station may determine to release the reserved radio resources when the serving cell available time expires without the UE successfully completing handover to the target cell of the target base station. As still another example, the target base station may determine to release the reserved radio resources when the serving cell available time expires after the UE successfully completes handover to another candidate target cell. As yet another example, the target base station may determine to release the reserved radio resources when the serving cell available time expires even before a handover cancel message is received after the UE successfully completes handover to another candidate target cell.

Further, the target base station may release the radio resources reserved for the UE if a specific time elapses using information included in the handover request information. Thus, it is possible to prevent unnecessary long-term reservation of radio resources due to frequent UE handover according to an embodiment. The source base station may perform efficient network load management according to an embodiment.

Hereinafter, more specific embodiments for controlling UE's handover operation will be described. For convenience of description, the following will be described under a scenario whether the source base station is a terrestrial-network base station and the target base station is a non-terrestrial network base station. However, the scenario is only for convenience of description. For example, embodiments may likewise apply to where the source base station is a non-terrestrial network base station, and the target base station is a non-terrestrial network base station or where the source base station is a terrestrial network base station, and the target base station is a terrestrial network base station. Further, the individual-detailed operations described below may configure embodiments individually or in any combination.

### NG-based conditional handover preparation

The source base station may recognize whether the UE supports NTN-related functions. The source base station may request the UE to transmit NTN radio access capability information and receive related information. Or, the source base station may receive any NTN-related UE capability information through an INITIAL CONTEXT SETUP REQUEST message during the UE context setup procedure.

The source base station configures measurement and reporting for the target cell/base station. For example, the source terrestrial network base station configures measurement and reporting for the target non-terrestrial network cell to the UE.

The source base station may determine to perform handover to the target cell or conditional handover based on one or more of the radio measurement result information, UE position, satellite orbit information, measurement reporting information received from the UE, any assistance information received from the UE and any assistance information received from the core network. For example, the source terrestrial network base station may determine to hand over to the target non-terrestrial network base station. Or, the source non-terrestrial network base station may determine to use conditional handover to the target terrestrial network base station. Any assistance information received from the UE or any assistance information received from the core network may include at least one of the UE's non-terrestrial network priority/preference and non-terrestrial network frequency priority/preference information.

The non-terrestrial network-based base station and the terrestrial network base station may interwork with each other as follows.

For example, if the non-terrestrial network and the terrestrial network are owned by a single operator, the non-terrestrial network base station and the terrestrial network base station may be connected through the Xn interface. In this case, Xn-based handover may be performed.

As another example, if the non-terrestrial network and the terrestrial network are owned by a single operator, and the non-terrestrial network base station and the terrestrial network base station are connected through the core network without an Xn interface, NG-based handover (interface-based handover between the base station and the core network, N2-based handover) may be performed.

As further another example, when an agreement is concluded between the operator owning the non-terrestrial network and the operator owning the terrestrial network, Xn-based handover or NG-based handover may be performed in the same way as when the networks are owned by a single operator.

Typically, cell coverage provided by a non-terrestrial network base station is significantly larger than that provided by a terrestrial network base station. For example, the cell diameter of the terrestrial base station is within a few kilometers, but the cell diameter of the non-terrestrial base station may exceed 100 km. Therefore, it may be very difficult in reality for a non-terrestrial network base station to have an Xn interface that is directly connected to all terrestrial network base stations. Considering this, NG-based handover may be necessary for interworking between a non-terrestrial network-based base station and a terrestrial network base station. Further, unlike terrestrial networks, non-terrestrial network (NTN)s have a small difference between RSRP at the cell edge and RSRP at the cell center, making it difficult to identify better cells through handover based on traditional measurement events (e.g., A3 events).

Therefore, for effective handover between non-terrestrial networks and terrestrial networks, time- or position-based conditional handover may be necessary in addition to the received radio quality. However, the conditional handover provided in the typical terrestrial network-based NR technology could only use received radio quality-based events (A3, A5 events) as conditional handover execution conditions. In particular, because the conditional handover provided in the typical NR technology only supported Xn-based handover to support fast handover, there is a problem in that it cannot support service continuity between the non-terrestrial network and the terrestrial network linked through the NG interface. The operations described below focus on NG interface-based handover but may be similarly applied to Xn interface-based handover. For example, the message transmitted from the source base station to the core network entity may be directly transmitted to the target base station. In this case, the information included in the message may be configured identically, or some information may be excluded.

The source base station may initiate handover preparation and transmit a handover request (Handover Required) message including handover request information to the core network entity (e.g., AMF, S-AMF). The handover request message may include one or more of target ID, global RAN node ID, selected TAI, target non-terrestrial network base station node ID, target non-terrestrial network cell ID, and transparent container (source to target transparent container) transmitted from the source to the target, PDU session IDs, information for indicating that the corresponding handover originates from the (5G/NR) terrestrial network, and conditional handover information request information.

The conditional handover information request information may include one or more of conditional handover (CHO) trigger estimated arrival probability information, UE position information, information about the area/district/zone where the UE is located, UE moving speed information, UE moving direction information, expected UE path information, and remaining/allowed/available service/access time estimated by the serving cell for the UE.

If the handover request message is received, the target base station may use the above-described information to allocate resources necessary for the incoming conditional handover. In other words, the target base station may reserve radio resources for the UE. Here, the conditional handover trigger information indicates 1-bit information for identifying whether the triggered conditional handover is a newly initiated/started conditional handover or a conditional handover that replaces a prepared conditional handover. The core network entity (e.g., AMF, T-AMF) may transmit a handover request message to the target base station. The message may include one or more of target base station node ID, target cell ID, transparent container transmitted from the source to the target, PDU session IDs, information for indicating that the corresponding handover originates from the (5G/NR) terrestrial network/non-terrestrial network, and conditional handover information request information.

The LEO-based non-terrestrial network continuously cause handover of large-scale UEs served through the cell as satellites move at high speeds. Accordingly, the load on the network increases. In particular, the load may increase further when early packet forwarding is used. When conditional handover is configured, resources are reserved in the target cell, so that the corresponding radio resource consumption may increase due to frequent handover of multiple UEs. Therefore, if assistance information related to the conditional handover (execution) of the corresponding UE is provided, the target base station may efficiently allocate and use the resources of the corresponding cell. For example, the target base station may maintain radio resource reservation for handover of the UE only for a specific time using serving cell available time information included in the handover request information. If the time according to the serving cell available time information elapses, the target base station may release the reserved radio resources.

The target base station prepares/creates a conditional handover (candidate) cell configuration.

The target base station transmits a handover request acknowledge message to the core network entity (e.g., AMF, T-AMF). The message may include one or more of the transparent container transmitted from the target to the source, a list of PDU sessions to be handed over, a list of PDU sessions that failed to be set up, and conditional handover information acknowledge information.

The core network entity (e.g., AMF, S-AMF) may transmit a handover command message to the source terrestrial network base station. The message may include one or more of the transparent container transmitted from the target to the source, a list of PDU sessions to be handed over, a list of PDU sessions that failed to be set up, and conditional handover information acknowledge information.

The conditional handover information acknowledge IE may include one or more pieces of information among the requested target cell ID, maximum number of conditional handover preparations, target cell service available time and target cell reference location for the cell/area/TA/region/district/zone/location where the UE is located (or for the corresponding UE or the corresponding area). The target cell service available time for the cell/area/TA/region/district/zone where the UE is located may include one or more pieces of information among the time when the UE may serve through the cell, the time when access is possible through the cell, the remaining time to the start of a service through the cell, the time of service start through the cell, duration/period/effective time when service is possible through the cell, time when execution of conditional handover to the cell is allowed/available/possible, the time duration/time/period when execution of conditional handover to the cell is allowed/available/possible, the time when execution of conditional handover to the cell is reserved, the effective time for execution of conditional handover to the cell, start SFN, start subframe number, slot offset (indicating a delay before the timer starts in the subframe) and start absolute time (e.g., UTC, coordinated universal time, timeInfoUTC) information.

The start SFN and start subframe number may be provided on a target cell basis. Or, the start SFN and start subframe number may be provided on a source cell basis. The maximum number of conditional handover preparations indicates the maximum number of conditional handover preparations in the target base station node for the corresponding UE. If the corresponding information is included in the conditional handover information acknowledge information and transmitted to the source base station, the source base station may refrain from initiating a handover preparation procedure for conditional handover exceeding the number indicated for the corresponding UE. The reference location of the target cell may indicate, e.g., cell center location information (on Earth), the location where the cell radio signal is strongest, the center location of the cell on Earth when a signal is transmitted in the beam direction of the satellite, four points (e.g., top/bottom/left/right, start and end points of the straight line in the moving direction, and start and end points of the straight line perpendicular to the straight line) of the coverage which provides radio signal quality exceeding a specific threshold/accessible/available/allowed for handover execution/allowed/maximum for the cell on the moving direction (straight line) of the satellite on Earth, and any location information for indicating cell coverage. The reference location may be displayed as geographic coordinates of latitude and longitude.

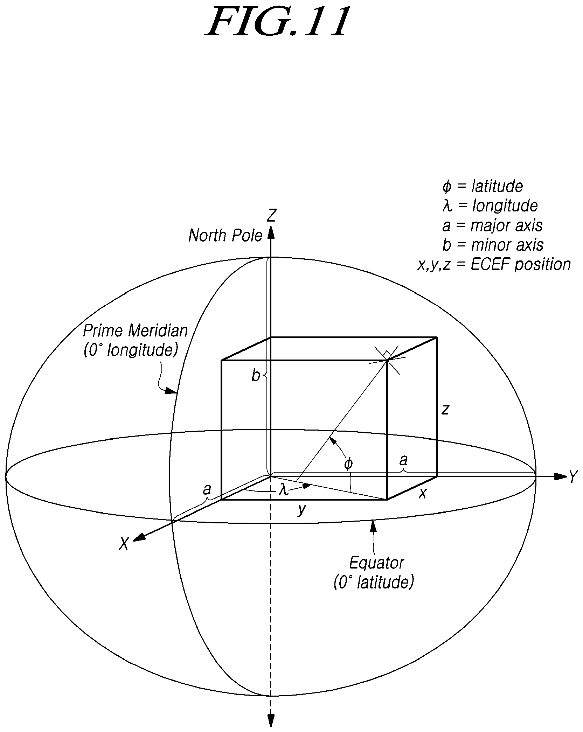

Or, the reference location may be displayed as earth-centered, earth-fixed coordinates, as shown in FIG. 11. FIG. 11 schematically illustrates the earth-centered, earth-fixed coordinate relationship for latitude and longitude. The terrestrial/non-terrestrial network base station that provides location-fixed cells may transmit fixed coordinate values. In contrast, the non-terrestrial network base station providing quasi-Earth-fixed cells or moving cells may transmit coordinate values according to time (regular time intervals or start time end time). For example, the UE may trigger execution of conditional handover when the distance from the serving cell to the reference location is larger than a specific threshold and/or when the distance from the neighbor cell to the reference location is smaller than another specific threshold and/or when the radio signal (RSRP) quality of the candidate target cell is larger than a specific threshold.

The source base station transmits an RRC reconfiguration message to the UE.

### NG-based status transfer

The source base station may determine whether or when to apply early data forwarding using information received from the target base station.

If early data forwarding is applied, the source base station may transmit an uplink RAN early status transfer message to the AMF. The AMF may transmit a downlink RAN early status transfer message to the target base station. The uplink RAN early status transfer message and/or the downlink RAN early status transfer message may include DRB list information for early status transfer during conditional handover and DL discarding DRB list information. The information may include DRB ID and FIRST DL COUNT value.

Thus, the COUNT (value) of the first downlink SDU to be forwarded from the source base station to the target base station may be transmitted from the source base station to the target base station through the AMF.

If early data forwarding is not applied, after completion of the UE's successful handover procedure, the target base station transmits a HANDOVER NOTIFY message to the AMF, and the AMF transmits a handover success message to the source base station, indicating that the UE has successfully accessed the target cell. The source base station may transmit an UPLINK RAN STATUS TRANSFER message to the AMF. The AMF may transmit a DOWNLINK RAN STATUS TRANSFER message to the target base station.

### When handover is successfully completed, the source base station instructs the remaining target base stations to cancel the handover through the N2 interface.

For example, if the stored configuration of the remaining candidate target cells is released after successfully completing the conditional handover, the operation may be performed as follows.

As described above, radio resources reserved for target cells may be released after a certain period of time elapses, based on the serving cell available time information included in the handover request information. Or, the reserved radio resources may be released if the UE's handover fails or if handover to another target cell succeeds and the serving cell available time information expires before a cancel message is received.

Meanwhile, the UE maintains connection with the source base station after receiving the conditional handover (CHO) configuration. Then, the UE starts CHO execution condition evaluation for the candidate cell. If the conditional handover candidate cell meets the corresponding conditional handover execution conditions, the UE detaches from the source base station and applies the stored configuration for the selected candidate cell, and the UE synchronizes to the candidate cell. Then, the UE completes the RRC handover procedure by transmitting an RRC reconfiguration complete message to the target base station. The UE releases the stored conditional configuration after successful completion of the RRC handover procedure.

The target base station may transmit a HANDOVER NOTIFY message to the core network entity (e.g., AMF, T-AMF). The core network entity (e.g., AMF, S-AMF) may transmit a Handover Success message to the source base station. Thus, it may be notified that the UE has successfully accessed the target cell.

The source base station may transmit a Handover Cancel message to the core network entity (e.g., AMF, S-AMF) to instruct the candidate target base station to cancel the handover for the UE. The core network entity (e.g., AMF, T-AMF) may transmit a message to cancel the conditional handover for the UE (release conditional handover configuration, release resources) to the candidate target base station. For example, the message may be a new message defined and used as distinguished from the existing NGAP message transmitted from the AMF to the base station for UE mobility management (HANDOVER CANCEL ACKNOWLEDGE, DOWNLINK RAN STATUS TRANSFER, HANDOVER SUCCESS, DOWNLINK RAN EARLY STATUS TRANSFER, PATH SWITCH REQUEST FAILURE, PATH SWITCH REQUEST ACKNOWLEDGE, HANDOVER PREPARATION FAILURE, HANDOVER REQUEST). As another example, a UE CONTEXT RELEASE message may be used as the message.

### When the handover execution conditions are met the source base station is instructed to execute handover

As described above, the LEO-based non-terrestrial network continuously causes handover of large-scale UEs served through the cell as satellites move at high speeds, increasing the load on the network. In particular, the load may increase further when early packet forwarding is used. When conditional handover is configured, resources are reserved in the target cell, so that the corresponding radio resource consumption may increase. If assistance information related to the handover of the corresponding UE is provided, the target base station may efficiently allocate and use the necessary resources of the corresponding cell. For example, when conditional handover is configured in the UE and the UE performs handover to a candidate target cell, the UE may indicate it to the source base station. Thus, the source base station may quickly recognize the UE's handover execution.

The information indicated by the UE to the source base station may use any one of uplink signaling, such as PUCCH/UCI, MAC CE, and uplink RRC message. The signaling message may include target cell information that meets conditional handover execution conditions. For fast handover execution, the UE may not expect to identify the corresponding signaling. When receiving the information, the source base station may instruct the remaining target cells/base stations other than the candidate target cell/base station meeting the conditional handover execution conditions to cancel handover through the N2 interface.

Hereinafter, additional embodiments will be described. Specifically, an embodiment for handover in a non-terrestrial network will be described below.

### Determining/receiving and indicating the base station's candidate target cell CHO configuration

Conditional handover used in typical NR technology is defined as handover performed in the UE when one or more handover execution conditions are met. In typical NR technology, execution condition evaluation begins when receiving a conditional handover (CHO) configuration. For example, when one or more candidate target special cells (SpCells) are configured, the UE evaluated the conditions (e.g., execution triggering event) of each configured candidate target special. If entry conditions applicable to the conditional handover execution triggering event are met/fulfilled during the indicated/defined trigger time (TimeToTrigger), the conditional handover was executed considering the event as met/fulfilled. For example, conditional reconfiguration execution was initiated. If one or more triggered cell exist, one of the triggered cells was selected for conditional reconfiguration execution, and the stored conditional handover configuration information (e.g., condRRCReconfig) of that cell was applied.

Meanwhile, in an non-terrestrial network (NTN), a base station may determine/generate/receive order information about cells serving a given location over time in a non-terrestrial network. Thereby, mobility control that reduces signaling load may be provided. The base station may determine the candidate target cell, base station order, and time of the UE by considering or using the UE's location, satellite's trajectory, satellite ephemeris information, information received from the core network, and information requested and received from the candidate target cell. The base station may receive or configure the satellite ephemeris information and candidate target cell/base station order/time for the physical/geographic location/area/region where the UE is located by the OAM. Or, the information may be transferred to the base station from any core network node/entity that provides the corresponding function. For example, the above-described information may be included and transferred in an INITIAL CONTEXT SETUP REQUEST message during the UE context setup procedure. The candidate target cell/base station order/time information for the physical/geographic location/area/region where the UE is located may be stored in UE context information. The information may be included in a handover request message/handover request acknowledge message and transmitted/received with one or more candidate target cells/base stations during the mobility procedure. As another example, the information may be stored in the base station as common information for supporting mobility through non-UE associated signaling regardless of UE context information.

As further another example, the source base station may request related information from one or more candidate target cells/base stations through a handover request message and receive related information from the candidate target base station through handover request acknowledge information. For example, the source base station may request by including the area information (e.g., cell information, TA information (e.g., TAC, TA id), UE location information, arbitrary UE location area/district/zone, and corresponding identifier). The source base station may receive service available time information about the corresponding cell for the corresponding area in response to the request.

For convenience of description, hereinafter, it is referred to as the service available time of the corresponding UE or cell for the corresponding area. However, it may be replaced with any other term.

The service available time of the UE or the cell for the area may include one or more pieces of information among the time when service is available through the cell, the time when access is possible through the cell, the time left to the start/end of the service through the cell, the start time of service through the cell, the time allowed/available/possible for execution of conditional handover to the cell, time duration/time/period allowed/available/possible for execution of conditional handover to the cell, the time reserved for execution of conditional handover to the cell, and effective time for execution of conditional handover to the cell.

Typically, the speed of a typical UE is relatively negligible compared to the speed of a satellite. The base station may determine the candidate target cell/base station for the UE based on the satellite's ephemeris information. Even in the case of a UE moving at high speed, such as an aircraft, if the UE is rendered to report related assistance information (e.g., UE location, UE path over time) periodically or by request/instruction/configuration of the network, the network may use it in determining the candidate target cell/base station (or candidate target cell/base station order) based on the same. For a UE without location change or for a UE with a slower relative speed compared to the satellite, the base station may generate an ordered list of expected candidate target cells/base stations to perform handover after a certain period of time. For example, a UE in serving cell coverage at (t0: 00 seconds) is expected to hand over to candidate target cell 1 at (t1: 07 seconds) and may be expected to hand over to candidate target cell 2 at (t2: 14 seconds) and to hand over to candidate target cell 3 at (t3: 21 seconds). The base station (source base station) may indicate the candidate target cell order to the UE. For convenience of description, when the base station configures conditional handover for one or more candidate target cells in the UE, the expected conditional handover execution order is expressed as (expected/predicted/estimated) candidate target cell order. However, this is for convenience of description and may be replaced with any term/phrase that means the same.

For example, the expected candidate target cell order may be indicated for the conditional handover configuration by specifically utilizing/limiting existing information elements in the conditional handover configuration information. The conditional handover configuration information about the typical NR technology included a conditional configuration identifier (CondReconfigId) to identify the conditional handover configuration, a conditional execution condition (condExecutionCond), and a conditional configuration (condRRCReconfig, RRC reconfiguration message applied when the condition is fulfilled). Among them, the conditional configuration identifier was able to identify the corresponding conditional composition through values from 1 to 8. The order may be identified by indicating/configuring the candidate target cell order in ascending order of conditional configuration identifier. For example, the conditional configuration identifier of candidate target cell 1 may be set to 1, the conditional configuration identifier of target cell 2 may be set to 2, and the conditional configuration identifier of target cell 3 may be set to 3.

As another example, the candidate target cell order may be identified by indicating/configuring, in ascending order, one of the measurement identifier (MeasId) used as the conditional execution condition, the measurement object identifier (measObjectID) associated with the measurement identifier, and the reporting configuration identifier (reportConfigID) associated with the measurement identifier.

As further another example, new configuration information may be defined to indicate the expected candidate target cell order for conditional handover configuration. Thus, the candidate target cell order may be identified and used through new configuration information without restrictions on the existing information element configuration.

As still another example, information for indicating the candidate target cell order may be configured through parameters associated with one or more timer(s). For example, the parameter may include cell service available time information for the corresponding area of target cell 1. (Additionally) The cell service available time information for the area may include absolute time (e.g., UTC, coordinated universal time, timeInfoUTC), start SFN, start subframe number, and slot offset information (indicating the delay before the start of the timer within the subframe). The UE may recognize the candidate target cell order using the cell service available time information for the area included in each target cell.

### The UE performs evaluation only on the conditions for the preferential candidate target cell CHO configuration.

In typical NR technology, when receiving a conditional handover (CHO) configuration for one or more candidate target cells, evaluation of each execution condition for one or more candidate cells was started. For example, when one or more candidate target special cells (SpCells) are configured, the UE evaluated the conditions (e.g., execution triggering event) of each configured candidate target special. However, when the order of candidate target cell CHO configuration is indicated, it is not desirable to perform evaluating conditional handover execution condition for all target cells from the viewpoint of, e.g., UE power consumption.

Therefore, the UE may perform evaluation only on the conditional handover execution conditions of the candidate target cell with the highest priority and suspend/pause/not start/stop/skip the evaluation on the conditional handover execution conditions of the remaining candidate target cells. As another example, when the UE successfully executes/completes conditional handover to the candidate target cell with the highest priority, the UE may perform evaluation only on the conditional handover execution conditions of the candidate target cell with the next priority and suspend/pause/not start/stop/skip evaluation on the conditional handover execution conditions of the remaining candidate target cells. As further another example, the UE may perform evaluation only on the conditional handover execution conditions of the candidate target cells with the first to nth (where n is a natural number) priorities and suspend/pause/not start/stop/skip evaluation on the conditional handover execution conditions of the remaining candidate target cells. Instruction information for the same may be indicated to the UE.

As still another example, if the order of the candidate target cells is not indicated, evaluation may be performed on the conditional handover execution conditions of the candidate target cell.

### Base station indicates whether to maintain/release the stored CHO configuration of the candidate target cell

In conditional handover used in typical NR technology, if RRC reconfiguration is applied as conditional handover is executed, all (stored) conditional handover configurations (e.g., all the entries in VarConditionalReconfig which includes the accumulated configuration of the conditional handover) were removed/released. Or, when the MAC of the UE successfully completes the triggered random access procedure in conditional handover execution and network handover execution, all (stored) conditional handover configurations were removed/released.

Meanwhile, in the non-terrestrial network (NTN), the base station may determine the UE's candidate target cell/base station order/time (according to time) and indicate the same to the UE. In this case, it may be desirable to maintain the stored CHO configuration of the candidate target cell when the UE performs any handover. Thus, the UE may sequentially perform handover through candidate target cells while reducing signaling between the serving base station and the candidate target base station or between the UE and the base station.

In order for the UE to not release the stored conditional handover in handover execution, the UE needs to recognize the same. As an example, the base station may indicate it through explicit indication information (e.g., one-bit maintain/release indication information), allowing the UE to recognize the same. If the relevant information is absent or if the UE is instructed to release, the UE may release the conditional handover stored in the handover execution as in the conventional art. As another example, the base station may implicitly indicate it through any indication information included in the conditional handover configuration, allowing the UE to recognize the same.

### UE transmits configured/stored CHO configuration to target base station

As described above, in conditional handover used in typical NR technology, if RRC reconfiguration is applied due to execution of conditional handover or after the RRC handover procedure is successfully completed, all (stored) conditional handover configurations were removed/released.

If the UE is able to execute conditional handover using the candidate target cell order/time list, it is desirable that during handover (execution), the UE transmits the CHO configuration to the target base station to allow the target base station to recognize the stored radio resource configuration for the UE and effectively control the same.

The UE maintains connection with the source base station after receiving the conditional handover (CHO) configuration. Then, the UE starts CHO execution condition evaluation for the candidate cell. If the conditional handover candidate cell meets the corresponding conditional handover execution conditions, the UE detaches from the source base station. The UE applies the stored configuration for the selected candidate cell and synchronizes to the candidate cell. Then, the UE completes the RRC handover procedure by transmitting an RRC reconfiguration complete message to the target base station.

The UE may maintain the stored conditional configuration even after successful completion of the RRC handover procedure. The UE may transmit one or more pieces of information included in the stored conditional configuration to the base station. The UE may store/transmit the conditional configuration identifier included in the stored conditional configuration and the measurement object information about the candidate target cell associated with the conditional execution condition. The measurement object information about the candidate target cell may include one or more pieces of information included in the NR measurement object configuration information, such as ssbFrequency, ssbSubcarrierSpacing, smtc, PCI, and freqBandIndicatorNR. The UE may store/transmit the conditional configuration identifier included in the stored conditional configuration and the target cell global ID (NR CGI) of the candidate target cell associated with the conditional execution condition. The UE may store/transmit the conditional configuration identifier included in the stored conditional configuration and information for indicating the candidate target cell order associated with the conditional execution condition.

### Release/remove candidate target cell CHO configuration if candidate target cell CHO configuration order/time elapses

If one or more candidate target cell CHO configuration orders are stored in the UE, the UE may check whether to meet/fulfill the conditional handover execution conditions corresponding to the stored candidate target cell CHO configuration order/time to thereby execute conditional handover. If any conditional handover execution condition is not met/fulfilled within the stored candidate target cell CHO configuration order/time, the UE may allow the candidate target cell CHO configuration not to be executed. Further, this may not be reused. Accordingly, if the candidate target cell CHO configuration order/time elapses, the UE may remove/release the conditional handover configuration of the candidate target cell.

As an example, the UE may start/perform evaluation of CHO execution condition on the candidate target cell within the stored candidate target cell CHO configuration order/time. The UE may start/perform evaluation of CHO execution condition on the candidate target cell within the service available time of the candidate target cell for the area where the UE is located. For example, the UE may start a specific timer at a time allowed/available/possible for execution of conditional handover to the cell. The UE may start/perform CHO execution condition evaluation on the candidate target cell while the timer is running. If the service available time information about the candidate target cell for starting the timer is not configured/indicated, the UE may start execution condition evaluation when receiving the conditional handover (CHO) configuration. Thus, as UE operations necessary to perform CHO execution condition evaluation immediately after receiving an RRC reconfiguration command are removed, UE's power consumption may be reduced.

If the CHO execution conditions (e.g., RSRP being larger than a threshold, meeting A3/A4/A5 events, etc.) for the candidate target cell are met while the timer is running, the UE may execute conditional handover. In a case where the CHO execution conditions are not met during the time duration/time/period when execution of conditional handover to the cell is allowed/available/possible, if the timer expires, the UE may remove/release the conditional handover configuration of the candidate target cell.

### If candidate target cell is released, instruct source base station to release/cancel

If the candidate target cell is removed/released (as the timer/valid period expires), the candidate target base station may also release the conditional handover configuration. The candidate target base station may transmit a CONDITIONAL HANDOVER CANCEL message to cancel prepared conditional handover to the source base station. The target base station may include the cause for canceling the conditional handover when transmitting the message.

Any UE context/resources (e.g., NG-RAN node UE XnAP ID, Conditional Handover Information Request(CHO Trigger, Estimated Arrival Probability), DRBs Subject To Early Status Transfer List, Conditional Handover Information Acknowledge(Requested Target Cell ID, Maximum Number of CHO Preparations) used between the candidate target base station and the source base station may be released.

If the conditional handover cancel message is received for the above-described cause, the source base station may not initiate the handover cancel procedure to another candidate target base station node or another signaling connection for the UE. For example, the source base station may skip the handover cancel procedure. Otherwise, the source base station may initiate a handover cancel procedure to another candidate target base station node or another signaling connection for the UE.

As described above, according to the embodiments, it is possible to effectively control the UE's mobility served through a non-terrestrial network. Further, according to the embodiment, handover may be efficiently performed on the UE served through a non-terrestrial network.

Hereinafter, hardware and software configurations of a target base station and a source base station capable of performing the above-described embodiments will be described.

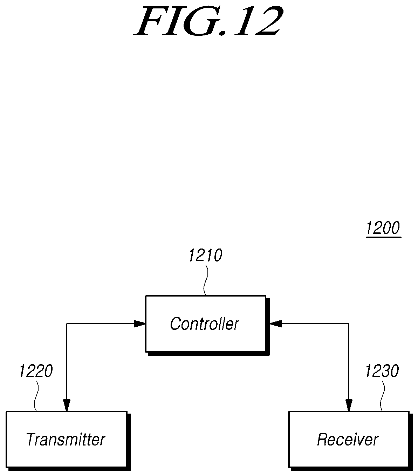

FIG. 12 is a block diagram illustrating a configuration of a target base station according to an embodiment.

Referring to FIG. 12, a target base station 1200 controlling handover of a UE may include a receiver 1230 configured to receive handover request information for handover of the UE from a source base station or a core network entity and a controller 1210 configured to reserve a radio resource for handover of the UE based on the handover request information and determine whether to release the reserved radio resource using serving cell available time information included in the handover request information.

For example, the receiver 1230 may receive the UE's handover request information from the source base station through an Xn interface. The handover request information may be included in a handover request message. Or, the receiver 1230 may receive the handover request information from the core network entity. In this case, the handover request information may be included in the handover request message.

The handover of the UE may be i) handover through the core network entity or ii) handover between base stations. Further, the UE's handover may be conditional handover that is performed by the UE when preset conditions are met. For example, the preset conditions may be time, wireless quality measurement results, etc.

According to an embodiment, the handover request information may include handover window information for handover of the UE. The handover window information indicates the period (e.g., duration) which the target base station may serve the UE's handover. Accordingly, the handover window information indicates a time range in which the UE may proceed with related procedures to perform handover. However, embodiments are not limited to these terms. For example, the handover window information may include at least one of duration and service start time in which the UE may provide service through the target base station. Or, the handover window information may include window start time and window end time. The service start time may correspond to the windows start time. Or, the service end time may be recognized by using duration serviceable in the service start time. Here, absolute time (e.g., UTC, coordinated universal time) may be used as the time.

According to another embodiment, the handover request information may include serving cell available time information. For example, the handover request information may include information about the remaining serviceable time of the serving cell to which the UE is currently connected. The serving cell available time may be configured in various forms, such as duration type or end time information.

The handover request information may further include one or more of target ID, global RAN node ID, selected TAI, target non-terrestrial network base station node ID, target non-terrestrial network cell ID, and transparent container (source to target transparent container) transmitted from the source to the target, PDU session IDs, information for indicating that the corresponding handover originates from the (5G/NR) terrestrial network, and conditional handover information request information. The conditional handover information request information may include one or more of conditional handover (CHO) trigger estimated arrival probability information, UE position information, information about the area/district/zone where the UE is located, UE moving speed information, UE moving direction information, expected UE path information, and remaining/allowed/available service/access time estimated by the serving cell for the UE.

Meanwhile, the controller 1210 may reserve radio resources for handover of the UE if the handover request information is received from the source base station or core network entity. For example, the controller 1210 may reserve specific radio resources for conditional handover for the UE. The reserved radio resources may be provided preferentially for the corresponding UE, and use of radio resources may be restricted until the reservation is released.

Meanwhile, if the serving cell available time information is included in the handover request information, the controller 1210 may determine whether to release the reserved radio resources using the serving cell available time information.

For example, if it is determined that the serving cell service time according to the serving cell available time information has ended, the controller 1210 may determine to release the reserved radio resources.

As another example, the controller 1210 may determine to release the reserved radio resources if a message instructing to release the reserved radio resources is received from the source base station or core network entity.

As further another example, the controller 1210 may determine to release the reserved radio resources when the serving cell available time expires without the UE successfully completing handover to the target cell of the target base station.

As still another example, the controller 1210 may determine to release the reserved radio resources when the serving cell available time expires after the UE successfully completes handover to another candidate target cell.

As yet another example, the controller 1210 may determine to release the reserved radio resources when the serving cell available time expires even before a handover cancellation message is received after the UE successfully completes handover to another candidate target cell.

Further, the controller 1210 may release the radio resources reserved for the UE if a specific time elapses using information included in the handover request information. Thus, it is possible to prevent unnecessary long-term reservation of radio resources due to frequent UE handover.

The controller 1210 controls the overall operation of the target base station 1200 according to the mobility control operation necessary to perform the above-described embodiments.

The transmitter 1220 and the receiver 1230 are used to transmit or receive signals or messages or data necessary for performing the above-described embodiments, with the core network entity and the source base station.

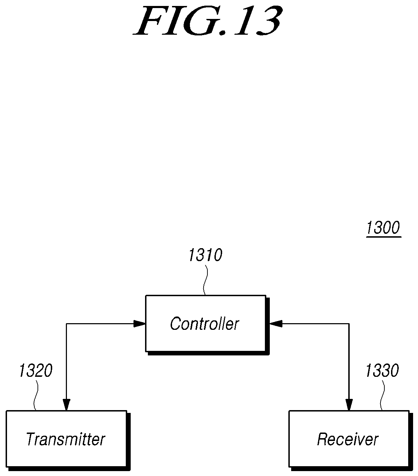

FIG. 13 is a block diagram illustrating a configuration of a source base station according to an embodiment.

Referring to FIG. 13, a source base station 1300 controlling handover of a UE may include a controller 1310 configured to configure conditional handover to the UE and configure handover request information including serving cell available time information for the UE and a transmitter 1320 configured to transmit the handover request information to a target base station or a core network entity. The target base station may control the radio resources for handover of the UE using the serving cell available time information included in the handover request information.

For example, the transmitter 1320 may transmit handover configuration information to the UE to control handover of the UE. According to the handover configuration information, the UE may perform operations, such as measuring radio quality for specific cells and reporting radio quality measurement results. Further, the transmitter 1320 may store and configure relevant information for performing handover in the UE. The UE's handover may be conditional handover which is performed by the UE when preset conditions are met. For example, the preset conditions may be time, wireless quality measurement results, etc.

The handover request information may include necessary information transferred to the target base station to support handover of the UE.

According to an embodiment, the handover request information may include handover window information for handover of the UE. The handover window information indicates the period (e.g., duration) which the target base station may serve the UE's handover. Accordingly, the handover window information indicates a time range in which the UE may proceed with related procedures to perform handover. However, the embodiments are not limited to the terms For example, the handover window information may include at least one of duration and service start time in which the UE may provide service through the target base station. Or, the handover window information may include window start time and window end time. The service start time may correspond to the windows start time. Or, the service end time may be recognized by using duration information serviceable in the service start time. Here, absolute time (e.g., UTC, coordinated universal time) may be used as the time.

According to another embodiment, the handover request information may include serving cell available time information. For example, the handover request information may include information about the remaining serviceable time of the serving cell to which the UE is currently connected. The serving cell available time information may be configured in various forms, such as duration type or end time information.

The handover request information may further include one or more of target ID, global RAN node ID, selected TAI, target non-terrestrial network base station node ID, target non-terrestrial network cell ID, and transparent container (source to target transparent container) transmitted from the source to the target, PDU session IDs, information for indicating that the corresponding handover originates from the (5G/NR) terrestrial network, and conditional handover information request information. The conditional handover information request information may include one or more of conditional handover (CHO) trigger estimated arrival probability information, UE position information, information about the area/district/zone where the UE is located, UE moving speed information, UE moving direction information, expected UE path information, and remaining/allowed/available service/access time estimated by the serving cell for the UE.

The transmitter 1320 may transmit the UE's handover request information to the target base station through the Xn interface. The handover request information may be included in a handover request message. Or, the transmitter 1320 may transmit handover request information to the core network entity (e.g., AMF or S-AMF) in the case of a handover procedure through the core network entity. Even in this case, the handover request information may be included in the handover request message.

Meanwhile, if necessary, the receiver 1330 may receive a handover complete message from the UE, and the transmitter 1320 may transmit a handover cancellation message to the target base station to which the UE has not handed over.

The target base station may control the radio resources for handover of the UE using the serving cell available time information included in the handover request information. For example, the target base station may reserve radio resources for handover of the UE if the handover request information is received from the source base station or core network entity. For example, the target base station may reserve specific radio resources for conditional handover for the UE. The reserved radio resources may be provided preferentially for the corresponding UE, and use of radio resources may be restricted until the reservation is released.

Further, the target base station may determine whether to release the reserved radio resources using the serving cell available time information included in the handover request information. For example, if the serving cell available time information is included in the handover request information, the target base station may determine whether to release the reserved radio resources using the serving cell available time information.

For example, if it is determined that the serving cell service time according to the serving cell available time information has ended, the target base station may determine to release the reserved radio resources. As another example, the target base station may determine to release the reserved radio resources if a message instructing to release the reserved radio resources is received from the source base station or core network entity. As further another example, the target base station may determine to release the reserved radio resources when the serving cell available time expires without the UE successfully completing handover to the target cell of the target base station. As still another example, the target base station may determine to release the reserved radio resources when the serving cell available time expires after the UE successfully completes handover to another candidate target cell. As yet another example, the target base station may determine to release the reserved radio resources when the serving cell available time expires even before a handover cancel message is received after the UE successfully completes handover to another candidate target cell.

Further, the target base station may release the radio resources reserved for the UE if a specific time elapses using information included in the handover request information. According to the embodiment, it is possible to prevent unnecessary long-term reservation of radio resources due to frequent UE handover. According to the embodiment, the source base station 1300 may perform efficient network load management.

The controller 1310 controls the overall operation of the source base station 1300 according to the mobility control operation necessary to perform the above-described embodiments.

The transmitter 1320 and the receiver 1330 are used to transmit or receive signals or messages or data necessary for performing the above-described embodiments, with the core network entity and the target base station.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2021-0055126 filed on April 28, 2021, 10-2021-0055137 filed on April 28, 2021, and 10-2022-0047442 filed on April 18, 2022, in the Korean Intellectual Property Office, the disclosures of which are incorporated by reference herein in their entireties.

## Claims

1. A method for controlling handover of a user equipment (UE) by a target base station, the method comprising:
receiving handover request information for the handover of the UE from a source base station or a core network entity;
reserving a radio resource for the handover of the UE based on the handover request information; and
determining whether to release the reserved radio resource using serving cell available time information included in the handover request information.

2. The method of claim 1, wherein the handover of the UE is conditional handover which is performed by the UE in an event that a preset condition is met.

3. The method of claim 1, wherein the handover request information includes handover window information for the handover of the UE.

4. The method of claim 3, wherein the handover window information includes at least one of duration and service start time where the UE may provide a service through the target base station.

5. The method of claim 1, wherein the determining whether to release the reserved radio resource comprises: determining to release the reserved radio resource if a serving cell service time according to the serving cell available time information is determined to end.

6. A method for controlling handover of a user equipment (UE) by a source base station, the method comprising:
configuring conditional handover to the UE;
configuring handover request information including serving cell available time information for the UE; and
transmitting the handover request information to a target base station or a core network entity,
wherein the target base station controls a radio resource for the handover of the UE using the serving cell available time information included in the handover request information.

7. The method of claim 6, wherein the handover request information further includes handover window information for the handover of the UE.

8. The method of claim 7, wherein the handover window information includes at least one of duration and service start time where a service may be provided to the UE through the target base station.

9. The method of claim 6, wherein the target base station reserves the radio resource for the handover of the UE based on the handover request information.

10. The method of claim 9, wherein the target base station releases the reserved radio resource if a serving cell service time according to the serving cell available time information is determined to end.

11. A target base station controlling handover of a user equipment (UE), comprising:
a receiver configured to receive handover request information for the handover of the UE from a source base station or a core network entity; and
a controller configured to reserve a radio resource for the handover of the UE based on the handover request information and determine whether to release the reserved radio resource using serving cell available time information included in the handover request information.

12. The target base station of claim 11, wherein the handover of the UE is conditional handover which is performed by the UE in an event that a preset condition is met.

13. The target base station of claim 11, wherein the handover request information includes handover window information for the handover of the UE.

14. The target base station of claim 13, wherein the handover window information includes at least one of duration and service start time where the UE may provide a service through the target base station.

15. The target base station of claim 11, wherein the controller determines to release the reserved radio resource if a serving cell service time according to the serving cell available time information is determined to end.
